# EUROPEAN PATENT APPLICATION

(11) **EP 3 086 099 A1**
(43) Date of publication of application: **26.10.2016**
(21) Application number: 16164325.9
(22) Date of filing: 07.04.2016
(51) Int. Cl.: G01F 23/284

(54) **MULTIPLEXED LEVEL SENSING PROBES**

(30) Priority: 17.04.2015 US 201514689611
(71) Applicant: Honeywell Limited, Mississauga, ON L5L 3S6 (CA)
(72) Inventor: BESELT, Ron, Morris Plains, NJ New Jersey 07950 (US); ANDRONIC, Cris, Morris Plains, NJ New Jersey 07950 (US); HARAN, Frank Martin, Morris Plains, NJ New Jersey 07950 (US)
(74) Representative: Houghton, Mark Phillip

(57) **Abstract**

A level sensing system includes a sensing head (130) configured to transmit a pulse through a first probe (125a) of at least a first probe (125a) and a second probe (125b). The sensing head (130) is also configured to receive the pulse from the first probe (125a) and identify that the pulse was received through the first probe (125a). The sensing head (130) is further configured to determine a depth of a material (105) in contact with the first probe (125a) in response to receiving the pulse. The identification of the probe through which the pulse was received is based on either a radio frequency (RF) switch (135) or on a predetermined pulse time delay or on a unique frequency signature.

## Description

### TECHNICAL FIELD

This disclosure relates generally to sensing container levels. More specifically, this disclosure relates to a method and apparatus to sense container levels with increased accuracy.

### BACKGROUND

Level sensing systems are used to measure tank levels and other container levels. The cost to measure container levels using level sensing systems can be significant, which may reduce the number of measurements taken within a container. Reducing the cost to measure container levels using level sensing systems can increase the number of measurements taken within a container, thus providing improved container level measurement accuracy.

### SUMMARY

This disclosure provides a method and apparatus to sense container levels using pulse guided wave radar.

In a first embodiment, an apparatus is provided. The apparatus includes a sensing head. The sensing head is configured to transmit a pulse through a first probe among at least a first probe and a second probe. The sensing head is also configured to receive the pulse from the first probe and identify that the pulse was received through the first probe. The sensing head is further configured to determine a depth of a material in contact with the first probe in response to receiving the pulse.

In a second embodiment, a method is provided. The method includes transmitting a pulse through a first probe of two or more probes. The method also includes receiving the pulse from the first probe and identifying that the pulse was received through the first probe. The method further includes determining a depth of a material in contact with the first probe in response to receiving the pulse.

In a third embodiment, an apparatus is provided. The apparatus includes a sensing head. The sensing head is configured to transmit a first pulse through a first probe and a second pulse through a second probe, the first probe and the second probe among two or more probes. The sensing head is also configured to receive the first pulse from the first probe and identify that the first pulse was received through the first probe. The sensing head is further configured to receive the second pulse from the second probe and identify that the second pulse was received through the second probe. The sensing head is configured to estimate a depth of a material in contact with the first probe and the second probe in response to receiving the first pulse and the second pulse.

In a fourth embodiment, a method is provided. The method includes transmit a first pulse through a first probe and a second pulse through a second probe, the first probe and the second probe among two or more probes. The method also includes receiving the first pulse from the first probe and identifying that the first pulse was received through the first probe. The method further includes receiving the second pulse from the second probe and identifying that the second pulse was received through the second probe. The method includes estimating a depth of a material in contact with the first probe and the second probe in response to receiving the first pulse and the second pulse.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:
FIGURES 1 through 8 illustrate examples of a pulse guided wave radar sensing system according to this disclosure; and
FIGURES 9 and 10 illustrate example methods according to this disclosure.

### DETAILED DESCRIPTION

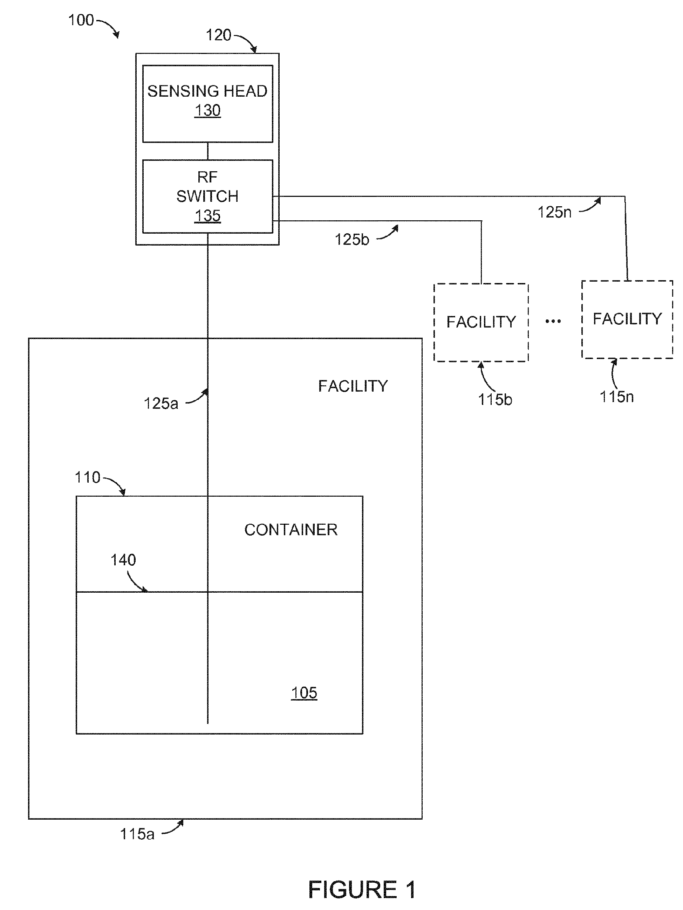

FIGURES 1 through 10, discussed herein, and the various embodiments used to describe the principles of this disclosure are by way of illustration only and should not be construed in any way to limit the scope of the concepts disclosed herein. Those skilled in the art will understand that the principles of this disclosure may be implemented in any type of suitably arranged device or system.

FIGURE 1 illustrates an example pulse guided wave radar sensing system 100 according to this disclosure. As shown in FIGURE 1, the system 100 includes various components that facilitate measuring a level of material 105 in one or more containers 110 of one or more facilities 115a-115n (or one or more portions thereof), such as one or more processes facilities, one or more material storage facilities, or the like. Each of the facilities 115a-115n includes one or more containers 110 such as an open weir, a chemical processing tank, a container in a hydrocarbon cracking system, or the like. The container 110 can store granular material such as grains, salts, sugars, beans, other dry goods, powders, or the like. The container 110 also can store liquids such as water, milk, chemicals, or the like.

In FIGURE 1, the system 100 includes a sensor 120 and two or more sensing wave guide probes 125a-125n (hereinafter "probes"). The sensor 120 includes a sensor head 130 and a radio frequency (RF) switch 135. The sensor head 130 contains processing circuitry configured to generate a radar pulse, emit or transmit the radar pulse through a probe, receive a radar pulse from the probe, and process a radar pulse from the probe (such as the probe 125a). As shown in FIGURE 1, the sensor head 130 transmits and receives the pulse via the RF switch 135.

For example, the sensor head 130 transmits a pulse to the RF switch 135. The RF switch 135 receives and transmits a pulse to a probe 125a. The pulse travels through the probes 125a and returns to the RF switch 135. The RF switch 135 subsequently receives and transmits another pulse to another probe 125b. The other pulse travels through the probe 125b and returns to the RF switch 135. The processes can be implemented for each of the plurality of probes 125a-125n in contact with the RF switch 135. The RF switch 135 provides an indication after each received pulse to the sensor head 130 of which probe received and returned the signal. The sensor head 130 determines based on the indication of which probe received and returned the signal which material in which container of which facility 115a-115n is sensed. The sensor head 130 can determine the level of material in contact with the particular probe based on the length of the probe, the material in contact with the probe, and the propagation time of the signal through the probe. In an embodiment, the sensing head 130 can include a multi-head configuration. For example, the sensing head 130 can have a stackable or configurable head to address various processes at the same time or different times without having to replace one head with another head. The sensing head 130 can also generate a range of pulse shapes or RF signals. For example, the sensing head 130 can include a plurality of application specific integrated circuits (ASICs) each used for different materials and that can be switched on or off as needed. Each of the plurality of ASICs can be communicatively coupled to the RF switch 135.

The sensing head 130 receives each pulse from the RF switch 135 and an indication of which probe 125a-125n each pulse was received from. As shown in FIGURE 1, the probe 125a extends into the container 110 of the facility 115a and crosses the surface 140 of the material 105 in the container 110. In an embodiment, the probe 125a extends towards the direction of gravity or from the ceiling of the container 110 to the floor of the container 110 so that the probe 125a penetrates the surface 140 of the material 105. As a pulse moves from the sensor 120 and through the probe 125a, the pulse is reflected when it reaches the portion of the probe 125 a that penetrates the surface 140 of the material 105 due to the dielectric constant mismatch at the air-material boundary. The time difference measured by the sensing head 130 and between an induced reference reflection and the multi-dielectric interface surface enables the measurement of the material level.

The sensor 120 estimates the depth of the material 105 in the container 110 and the amount of material 105 stored in the container 110 using the propagation time of the pulse through the probe 125a. The sensor 120 also receives the indication identifying that the pulse is linked with the probe 125a and associating the probe 125a with the container 110. For example, the sensor head 130 includes a memory that links probes with particular containers. The sensory head 130 also stores the inner dimensions of each of the containers linked with the probes. The sensory 120 estimates the amount of material in each container of the facilities 115a-115n based on the height position of the surface of the material measured using the probe. In an embodiment, the material type can also be a factor when calculating the propagation time of the pulse. As shown in FIGURE 1, a single sensor 120 estimates the amount of material in different containers of two or more facilities 125a-125n.

In the system 100 illustrated in FIGURE 1, the sensor 120 and sensing head 130 includes one or more controllers or processing circuity to perform the functions described herein. For example, each sensor 120 and sensor head 130 could include one or more processing devices and one or more memories for storing instructions and data used, generated, or collected by the one or more processing devices. Each of the controllers could also include at least one network interface, such as one or more Ethernet interfaces or wireless transceivers. In an embodiment, each sensors 120 and sensor head 130 are 4-20mA devices with a HART of Foundation Fieldbus (FF) protocol.

Although FIGURE 1 illustrates one example of an pulse guided wave radar sensing system 100, various changes may be made to FIGURE 1. For example, the system 100 could include any number of sensors, probes, facilities, and containers. Also, the makeup and arrangement of the system 100 in FIGURE 1 is for illustration only. Components could be added, omitted, combined, or placed in any other suitable configuration according to particular needs. Further, particular functions have been described as being performed by particular components of the system 100. This is for illustration only. In general, pulse guided wave radar sensing systems are highly configurable and can be configured in any suitable manner according to particular needs. In addition, FIGURE 1 illustrates an example environment in which a pulse guided wave radar sensing system can be used. This functionality can be used in any other suitable device or system.

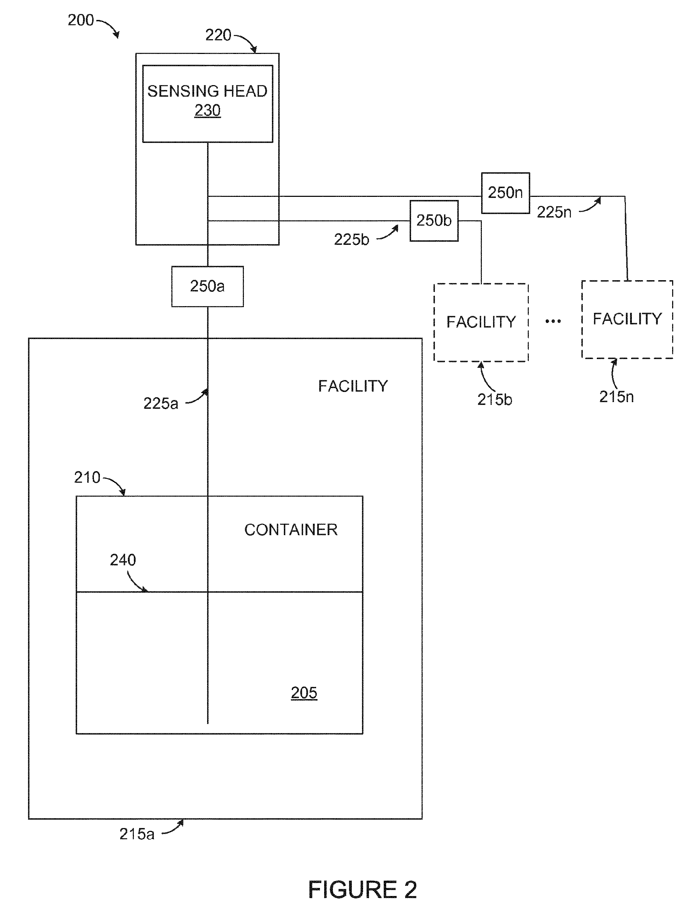

FIGURE 2 illustrates an example pulse guided wave radar sensing system 200 according to this disclosure. The system 200 shown here could, for example, be used in various components shown in FIGURE 1. However, the system 200 could be used in any other suitable system. The system 200 includes several of the components illustrated in FIGURE 1. For example, the system 200 includes a sensor 220 comprising a sensor head 230, and two or more facilities 215a-215n each including one or more containers 210. The system 200 also includes two or more probes 225a-225n communicatively coupled to the sensor 220 (for example, via a splitter) and each associated with a particular container such as container 210 in facility 215a. Each of the probes 225a-225n penetrates the containers and traverses through a cavity inside the container, for example from the ceiling to the floor of the cavity inside the container. The cavity inside the container contains a material such as material 205 stored within the container 210. The probe 225a penetrates through the surface 240 of the material 205. When a pulse is generated and transmitted by the sensor 220 and transmitted through the probes 225a-225n, the total propagation time of the pulse is recorded to estimate the depth of the material in the container 210 and the amount of material 205 stored in the container 210.

The system 200 also includes two or more delay lines 250a-250n each attached to the probes 225a-225n. Each of the delay lines 250a-250n delays the propagation of a pulse through the probes 225a-225n by different amounts. Thus, a pulse that is propagated through the probe 225a with the delay line 250a will return to the sensor 220 in a different amount of time than a pulse that is propagated through the probe 225b with the delay line. The delays 225a-225n are chosen such that echo curves obtained from each probe 225a-225n do not overlap thus allowing us to uniquely identify each echo curve and therefore each level from each container. Accordingly, the sensor 220 is able to associate each pulse with a different probe (and thus a particular container) based on the amount of extra propagation time create by each delay lines 250a-250n. The sensor 220 estimates the depth of the materials such as the material 205 in the container 210 and the amount of material 205 stored in the container 210 using the propagation time of the pulse through the probe 225a. The sensor 220 also receives an indication identifying that a particular pulse is linked with the probe 225a and associating the probe 225a with the container 210.

Although FIGURE 2 illustrates one example of a pulse guided wave radar sensing system 200, various changes may be made to FIGURE 2. For example, the delay lines 250a-250n can be removed when each of the probes 225a-225n modify a pulse to include a unique frequency signature. When the sensor 220 receives the pulse from the probe 225a, for example, the sensor 220 can identify that the pulse is from the probe 225a and not the probes 225b-225n based on the unique frequency signature included by the probe 225a in the pulse. As a result, the sensor 220 can identify that a pulse is received from a particular probe without using the delay lines 250a-250n.

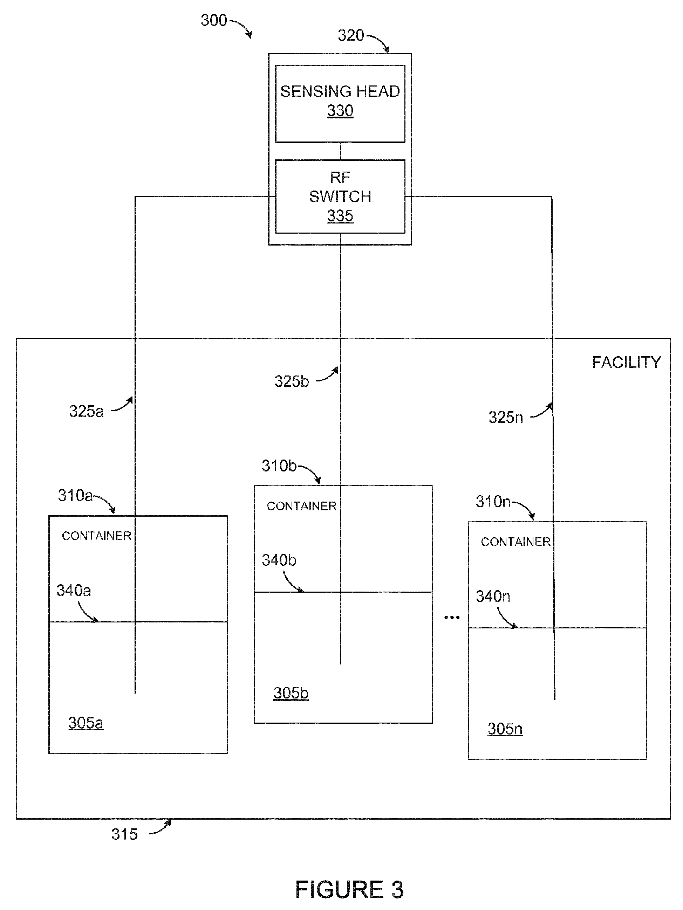

FIGURE 3 illustrates an example pulse guided wave radar sensing system 300 according to this disclosure. The system 300 shown here could, for example, be used in various components shown in FIGURES 1 and 2. However, the system 300 could be used in any other suitable system. For example, the system 300 includes a sensor 320 comprising a sensor head 330, and a facility 315 including one or more containers 310a-310n. The system 300 also includes two or more probes 325a-325n communicatively coupled to the sensor 320 and each associated with a particular container such as the containers 310a-310n in facility 315. Each of the probes 325a-325n penetrates the containers 310a-310n and traverses through a cavity inside each container, for example from the ceiling to the floor of the cavity inside the container. The cavity inside the container contains a material such as materials 305a-305n stored within the containers 310a-310n, respectively. Each of the probes 325a-325n penetrates through the surface 340a-340n, respectively, of each of the materials 305a-305n. When a pulse is generated and transmitted by the sensor 320 and transmitted along the probes 325a-325n, the total propagation time of each pulse is recorded to estimate the depth and the amount of material the 305a-305n stored in each of the containers 310a-310n, respectively. In an embodiment when the sensing head 330 includes a plurality of ASICs connected to the RF switch 335, each of the plurality of ASICs can be configured to provide a unique signal signature to measure each material. Furthermore, one probe 325a can be configured to detect an interface/foam while another probe 325b can be configured to measure the product level in the container 310 or the amount of product in the container 310.

The sensor 320 also includes an RF switch 335. The sensor head 330 transmits and receives the pulse via the RF switch 335. For example, the sensor head 330 transmits a pulse to the RF switch 335. The RF switch 335 receives and transmits the pulse to one probe of the one or more probes 325a-325n. The pulse travels along the probes and returns to the RF switch 335.

The sensor 320 estimates the depth of the materials 305a-305n in each of the containers 310a-310n and the amount of material stored in each the containers 310a-310n using the propagation time of the pulse through each of the probes 325a-325n. For example, the sensor head 330 includes a memory that links probes with particular containers. The sensor head 330 also stores the inner dimensions of each of the containers linked with the probes. The sensor head 320 estimates the amount of material in each of the containers 310a-310n based on the height position of the surface 340a-340n of each of the materials 305a-305n, measured using each of the probes 310a-310n, respectively. In an embodiment, the material type can also be a factor when calculating the propagation time of the pulse. As shown in FIGURE 3, a single sensor 320 estimates the amount of material in two or more containers 310a-310n of a facility 315.

In the system 300 illustrated in FIGURE 3, the sensor 320 and sensing head 330 includes one or more controllers or processing circuity to perform the functions described herein. For example, each sensor 320 and sensor head 330 could include one or more processing devices and one or more memories for storing instructions and data used, generated, or collected by the one or more processing devices. Each of the controllers could also include at least one network interface, such as one or more Ethernet interfaces or wireless transceivers. In an embodiment, each sensors 320 and sensor head 330 are 4-20mA devices with a HART of Foundation Fieldbus (FF) protocol.

As described herein, it may become necessary or desirable to remove a component from the pulse guided wave radar sensing system 300. For example, the RF switch 335 can be removed when each of the probes 325a-325n modifies a pulse to include a unique frequency signature. When the sensor 320 receives the pulse from each of the probes 325a-325n, for example, the sensor 320 can identify that the pulse is from a particular probe such as the probe 325a and not the probes 325b-325n based on the unique frequency signature included by the probe 325a in the pulse. As a result, the sensor 320 can identify that a pulse is received from a particular probe without using the RF switch 335.

Although FIGURE 3 illustrates one example of an pulse guided wave radar sensing system 300, various changes may be made to FIGURE 3. For example, the system 300 could include any number of sensors, probes, facilities, and containers. Also, the makeup and arrangement of the system 300 in FIGURE 3 is for illustration only. Components could be added, omitted, combined, or placed in any other suitable configuration according to particular needs. Further, particular functions have been described as being performed by particular components of the system 300. This is for illustration only. In general, pulse guided wave radar sensing systems are highly configurable and can be configured in any suitable manner according to particular needs. In addition, FIGURE 3 illustrates an example environment in which a pulse guided wave radar sensing system can be used. This functionality can be used in any other suitable device or system.

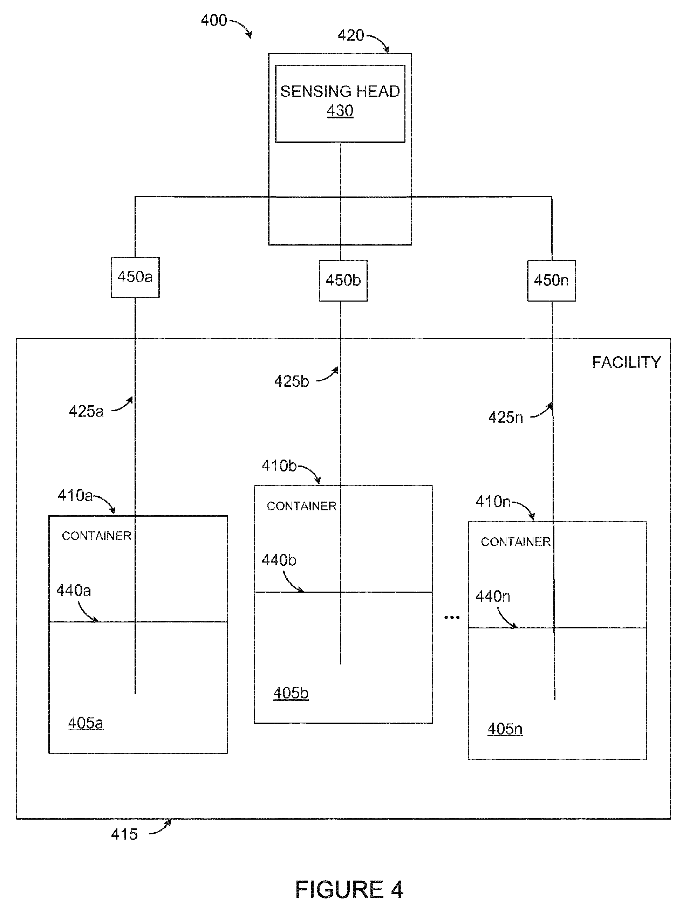

FIGURE 4 illustrates an example pulse guided wave radar sensing system 400 according to this disclosure. The system 400 shown here could, for example, be used in various components shown in FIGURES 1-3. However, the system 400 could be used in any other suitable system. The system 400 includes several of the components illustrated in FIGURES 1-3. For example, the system 400 includes a sensor 420 comprising a sensor head 430, and two or more containers 410a-410n in a facility 415. The system 400 also includes two or more probes 425a-425n communicatively coupled to the sensor 420 and each associated with a particular container of the containers 410a-410n in the facility 415. Each of the probes 425a-425n penetrates the containers and traverses through a cavity inside each of the containers 410a-410n, for example from the ceiling to the floor of the cavity inside each of the containers 410a-410n. The cavities inside each of the containers 410a-410n contain materials 405a-405n, respectively. The probes 425a-425n penetrate through a surface 440a-440n of the materials 405a-405n, respectively. When a pulse is generated and transmitted by the sensor 420 and through any one or more of the probes 425a-425n, the time difference measured by the sensing head 430 and between an induced reference reflection and the multi-dielectric interface surface enables the measurement of the material level.

The system 400 also includes two or more delay lines 450a-450n each attached to the probes 425a-425n. Each of the delay lines 450a-450n delays the propagation of a pulse through the probes 425a-425n by different amounts. Thus, pulses that are propagated through probes 425a-425n with delay lines 450a-450n, respectively, each will return to the sensor 220 at different amounts of time compared to the other probes 425a-425n (assuming the material amounts in each of the containers are substantially the same and the length of the probes are substantially the same). Accordingly, the sensor 420 is able to associate each pulse with a different probe (and thus a particular container) based on the amount of extra propagation time created by each delay line 450a-450n. The sensor 420 estimates the depth of each of the materials 405a-405n in each of the containers 410a-410n, respectively, and the amount of each of the materials 405a-405n stored in each of the containers 410a-410n using the propagation time of the pulse through each of the probes 425a-425n. The sensor 420 also receives an indication identifying that a particular pulse is linked with one of probe 425a-425n and associating a particular probe 425a-425n with one of the containers 410a-410n.

Although FIGURE 4 illustrates one example of a pulse guided wave radar sensing system 400, various changes may be made to FIGURE 4. For example, the delay lines 450a-450n can be removed when each of the probes 425a-425n modifies a pulse to include a unique frequency signature. When the sensor 420 receives the pulse from the probe 425a, for example, the sensor 420 can identify that the pulse is from the probe 425a and not the probes 425b-425n based on the unique frequency signature included by the probe 425a in the pulse. As a result, the sensor 420 can identify that a pulse is received from a particular probe without using the delay lines 450a-450n.

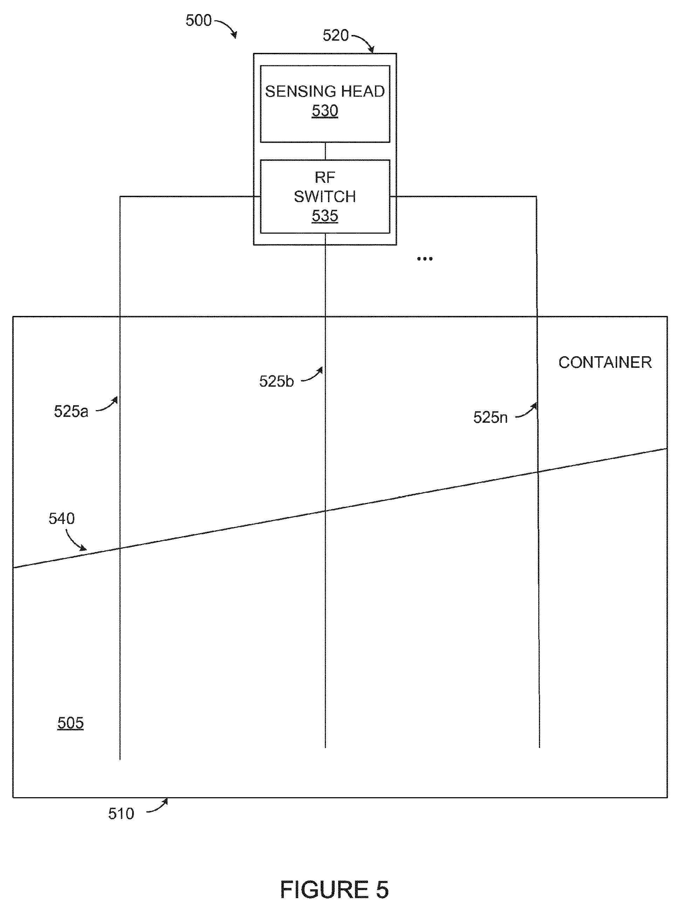

FIGURE 5 illustrates an example pulse guided wave radar sensing system 500 according to this disclosure. The system 500 shown here could, for example, be used in various components shown in FIGURES 1-4. However, the system 500 could be used in any other suitable system. For example, the system 500 includes a sensor 520 comprising a sensor head 530, and a container 510. The system 500 also includes two or more probes 525a-525n communicatively coupled to the sensor 520 and each penetrating the container 510 and traversing through a cavity inside the container 510, for example from the ceiling to the floor of the cavity inside the container 510. The cavity inside the container contains a material 505. The probes 525a-525n also penetrate through the surface 540 of the material 505. When a pulse is generated and transmitted by the sensor 520 and through the probes 525a-525n, the time difference measured by the sensing head 130 and between an induced reference reflection and the multi-dielectric interface surface enables the measurement of the material level.

The sensor 520 also includes an RF switch 535. The sensor head 530 transmits and receives the pulse via the RF switch 535. For example, the sensor head 530 transmits a pulse to the RF switch 535. The RF switch 535 receives and transmits the pulse to one of the one or more probes 525a-525n. The pulse travels through the probes and returns to the RF switch 535. The RF switch 535 provides an indication to the sensor head 530 linking the received pulse with a particular probe 525a-525n (and thus a particular portion of the container 510). The sensor head 530 can determine based on the indication linking a particular pulse received with a particular probe an area in the container 510 where the material 505 is sensed.

The sensor 520 can receive pulses from each of the probes 525a-525n and take an average depth estimate of the material 505 in the container 510 and the amount of material stored in the container 510 using the propagation time of the pulse through each of the probes 525a-525n using techniques discussed herein. This provides a more accurate reading of an amount of granular material stored in the container when, for example, the granular material surface forms a cone shape when deposited in the container.

The sensor 520 also determines if the container 510 is tilted or knocked over for example when the container 510 is being transported on a truck, train, or ship. For example, the indication identifying that a particular pulse is linked with one of the probes 525a-525n and associating a particular probe 525a-525n with a portion of the container 510 can allow for the sensor 520 to determine if the container 510 is on its side (or not upright). In this case, one probe, such as probe 525a, would indicate that the container 510 is completely full of a material 505 while another probe, such as probe 525b, would indicate that container 510 contains no material 505.

In the system 500 illustrated in FIGURE 5, the sensor 520 and sensing head 530 includes one or more controllers or processing circuity to perform the functions described herein. For example, the sensor 520 and the sensor head 530 could include one or more processing devices and one or more memories for storing instructions and data used, generated, or collected by the one or more processing devices. Each of the controllers could also include at least one network interface, such as one or more Ethernet interfaces or wireless transceivers. In an embodiment, each sensors 520 and sensor head 530 are 4-20mA devices with a HART of Foundation Fieldbus (FF) protocol.

As described herein, it may become necessary or desirable to remove a component from the pulse guided wave radar sensing system 500. For example, the RF switch 535 can be removed when each of the probes 525a-525n modifies a pulse to include a unique frequency signature. When the sensor 520 receives the pulse from each of the probes 525a-525n, for example, the sensor 520 can identify that the pulse is from a particular probe such as the probe 525a and not the probes 525b-525n based on the unique frequency signature included by the probe 525a in the pulse. As a result, the sensor 520 can identify that a pulse is received from a particular probe without using the RF switch 535.

It should be understood that when a plurality of probes 525a-525n are used in a particular container 510, the probes 525a-525n can include a variety of different spatial configurations (from a top a view perspective). In an embodiment, the probes 525a-525n can be arranged linearly so that the probes 525a-525n from a single row of probes 525a-525n. The probes 525a-525n can be position to form one or more polygonal shapes (such triangular, rectangular, or hexagonal shapes) so that surface plane estimations and a quantity estimation of the material 505 can be identified in the container 510. For example, a triangular probe configuration can be used when the material 505 is a liquid to identify the surface level (having a relatively planar surface) and the volume of the liquid in the container 510. In an embodiment, the probes 525a-525n can be position in a grid shape including a plurality of rows and columns to generate an accurate reading of the amount of material 505 and an accurate estimation of the topography of the material surface in the container 510. For example, a grid configuration of the probes 525a-525n can be used when the material is a granular material which can have non-planar surface topographies.

Although FIGURE 5 illustrates one example of a pulse guided wave radar sensing system 500, various changes may be made to FIGURE 5. For example, the system 500 could include any number of sensors, probes, facilities, and containers. Also, the makeup and arrangement of the system 500 in FIGURE 5 is for illustration only. Components could be added, omitted, combined, or placed in any other suitable configuration according to particular needs. Further, particular functions have been described as being performed by particular components of the system 500. This is for illustration only. In general, pulse guided wave radar sensing systems are highly configurable and can be configured in any suitable manner according to particular needs. In addition, FIGURE 5 illustrates an example environment in which a pulse guided wave radar sensing system can be used. This functionality can be used in any other suitable device or system.

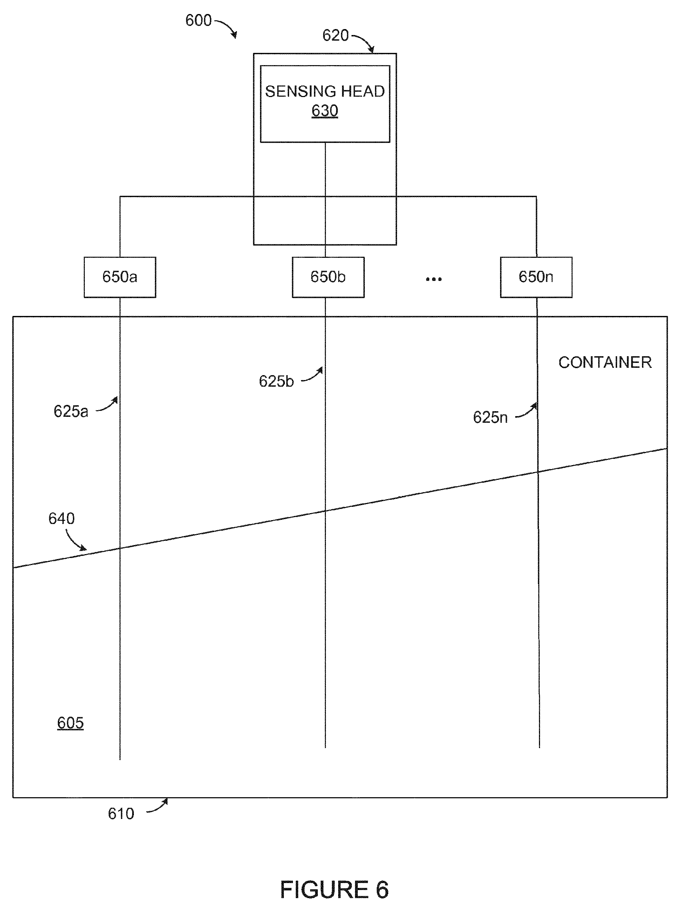

FIGURE 6 illustrates an example pulse guided wave radar sensing system 600 according to this disclosure. The system 600 shown here could, for example, be used in various components shown in FIGURES 1-5. However, the system 600 could be used in any other suitable system. The system 600 includes several of the components illustrated in FIGURES 1-5. For example, the system 600 includes a sensor 620 comprising a sensor head 630 and container 610. The system 600 also includes two or more probes 625a-625n communicatively coupled to the sensor 620 and each associated with a particular location through the container 610. Each of the probes 625a-625n penetrates the container 610 and traverses through a cavity inside the container 510, for example from the ceiling to the floor of the cavity. The cavity inside the container 610 contains a material 605. The probes 625 penetrate through a surface 640 of the material 605. When a pulse is generated and transmitted by the sensor 620 and through the probes 625a-625n, the total propagation time of each pulse through each probe 625a-625n is recorded to estimate an average depth and estimate an amount of the material 605 stored in container 610.

The system 600 also includes two or more delay lines 650a-650n each attached to the probes 625a-625n. Each of the delay lines 650a-650n delays the propagation of a pulse through the probes 625a-625n by different amounts. Thus, pulses that are propagated through probes 625a-625n with delay lines 650a-650n, respectively, each will return to the sensor 620 after different amounts of time compared to the other probes 625a-625n (assuming the material amounts in each of the containers are substantially the same and the length of the probes are substantially the same). Accordingly, the sensor 620 is able to associate each pulse with a different probe (and thus a particular area of the container 610) based on the amount of extra propagation time created by each delay line 650a-650n. The sensor 620 determines the average depth of the material 605 in the container 610 and the amount of materials 605 stored in the container 610 using the propagation time of the pulse through each of the probes 625a-625n. In an embodiment, the sensing head 630 can be configured to provide a pulse to particular probe such as probe 625a without providing a pulse to the remaining probes such as 625b-625n. This feature can be used for diagnostic purpose for example by comparing readings between two or more probes to determine if a particular probe is broken or malfunctioning.

Although FIGURE 6 illustrates one example of a pulse guided wave radar sensing system 600, various changes may be made to FIGURE 6. For example, the delay lines 650a-650n can be removed when each of the probes 625a-625n modifies a pulse to include a unique frequency signature. When the sensor 620 receives the pulse from the probe 625a, for example, the sensor 620 can identify that the pulse is from the probe 625a and not the probes 625b-625n based on the unique frequency signature included by the probe 625a in the pulse. As a result, the sensor 620 can identify that a pulse is received from a particular probe without using the delay lines 650a-650n.

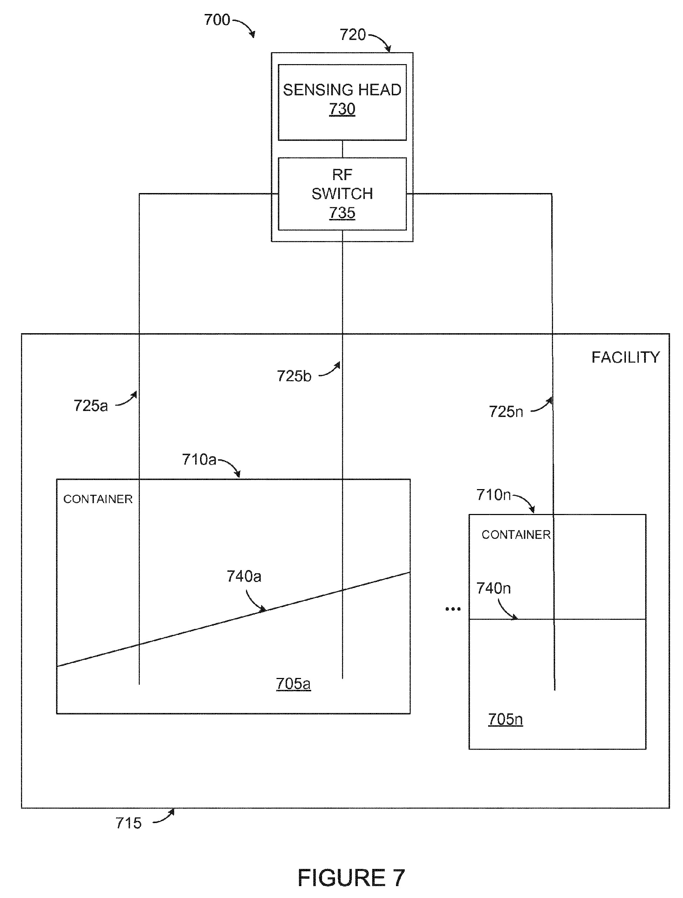

FIGURE 7 illustrates an example pulse guided wave radar sensing system 700 according to this disclosure. The system 700 shown here could, for example, be used in various components shown in FIGURES 1-6. However, the system 700 could be used in any other suitable system. For example, the system 700 includes a sensor 720 comprising a sensor head 730, and two or more containers 710a-710n in a facility 715. The system 700 also includes two or more probes 725a-725n communicatively coupled to the sensor 720 and each penetrating the containers 710a-710n and traversing through a cavity inside containers 710a-710n, for example from the ceiling to the floor of the cavity inside the containers 710a-710n. Each of the cavities inside the containers contain materials 705a-705n. The probes 725a-725n also penetrate through the surfaces 740a-740n of each of the materials 705a-705b. When a pulse is generated and transmitted by the sensor 720 and through the probes 725a-725n, the total propagation time of each pulse is recorded to estimate the depth and the amount of material 705a-705n stored in each container 710a-710n.

The sensor 720 also includes an RF switch 735. The sensor head 730 transmits and receives the pulse via the RF switch 735. For example, the sensor head 730 transmits a pulse to the RF switch 735. The RF switch 735 receives and splits the pulse between the two or more probes 725a-725n. The pulse travels through each of the probes 725a-725n and returns to the RF switch 735. The RF switch 735 provides an indication to the sensor head 730 linking each of the received pulses with a particular probe 725a-525n (and thus a particular portion of a particular container 710a-710n). The sensor head 730 can determine based on the indication linking a particular pulse received with a particular probe of an area in one of the containers 710a-710n where each of the materials 705a-705n, respectively, is sensed or based on an indication linking a particular received pulse with a particular probe of a particular container 710a-710n.

The sensor 720 can receive pulses from each of the probes 725a and 725b and take an average depth estimate of the material 705a in the container 710a. The sensor 720 can also receive a pulse from a probe 725n and estimate a depth of the material 705n stored in the container 710n. This configuration provides a more accurate reading of an amount of granular material stored in the container when, for example, the granular material forms a cone shape when deposited in the container 710a while also providing a reading of an amount of material in another container 710n.

In the system 700 illustrated in FIGURE 7, the sensor 720 and sensing head 730 includes one or more controllers or processing circuity to perform the functions described herein. For example, sensor 720 and sensor head 730 could include one or more processing devices and one or more memories for storing instructions and data used, generated, or collected by the one or more processing devices. Each of the controllers could also include at least one network interface, such as one or more Ethernet interfaces or wireless transceivers.

As described herein, it may become necessary or desirable to remove a component from the pulse guided wave radar sensing system 700. For example, the RF switch 735 can be removed when each of the probes 725a-725n modifies a pulse to include a unique frequency signature. When the sensor 720 receives the pulse from each of the probes 725a-725n, for example, the sensor 720 can identify that the pulse is from a particular probe such as the probe 725a and not the probes 725b-725n based on the unique frequency signature included by the probe 725a in the pulse. As a result, the sensor 720 can identify that a pulse is received from a particular probe without using the RF switch 735.

Although FIGURE 7 illustrates one example of an pulse guided wave radar sensing system 700, various changes may be made to FIGURE 7. For example, the system 700 could include any number of sensors, probes, facilities, and containers. Also, the makeup and arrangement of the system 700 in FIGURE 7 is for illustration only. Components could be added, omitted, combined, or placed in any other suitable configuration according to particular needs. Further, particular functions have been described as being performed by particular components of the system 700. This is for illustration only. In general, pulse guided wave radar sensing systems are highly configurable and can be configured in any suitable manner according to particular needs. In addition, FIGURE 7 illustrates an example environment in which a pulse guided wave radar sensing system can be used. This functionality can be used in any other suitable device or system.

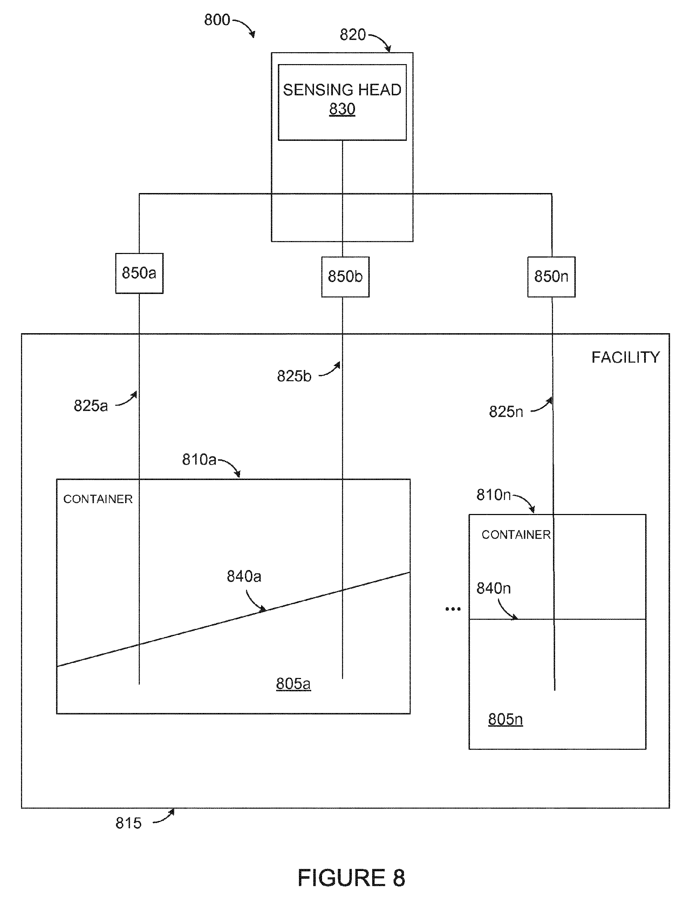

FIGURE 8 illustrates an example pulse guided wave radar sensing system 800 according to this disclosure. The system 800 shown here could, for example, be used in various components shown in FIGURES 1-7. However, the system 800 could be used in any other suitable system. The system 800 includes several of the components illustrated in FIGURES 1-7. For example, the system 800 includes a sensor 820 comprising a sensor head 830 and two or more containers 810a-810n in a facility 815. The system 800 also includes two or more probes 825a and 825b communicatively coupled to the sensor 820 and each associated with a particular location through the container 810a. The system 800 also includes one or more probes 825n communicatively coupled to the sensor 820 and associated with a particular container 810n. Each of the probes 825a-825n penetrates the containers 810a-810n and traverses through cavities inside containers 810a-810n, for example from the ceiling to the floor of the cavities. The cavities inside the containers 810a-810n contain materials 805a-805n, respectively. The probes 825a-825n penetrate through the surfaces 840a-840n of the materials 805a-805n, respectively. When a pulse is generated and transmitted by the sensor 820 and through the probes 825a and 825b, the total propagation time of each pulse through each of the probes 825a and 825b is recorded to estimate an average depth of material 805a and estimate an amount of the material 805a stored in container 810a. When a pulse is generated and transmitted by the sensor 820 and through the probe 825n, the total propagation time of the pulse through the probe 825n is also recorded to estimate a depth of the material 805n and to estimate an amount of the material 805n stored in the container 810n.

The system 800 also includes two or more delay lines 850a-850n each attached to the probes 825a-825n. Each of the delay lines 850a-850n delays the propagation of a pulse through the probes 825a-825n by different amounts. Thus, pulses that are propagated through the probes 825a-825n with the delay lines 850a-850n, respectively, each will return to the sensor 820 after different amounts of time compared to the other probes 825a-825n (assuming the material amounts in each of the containers are substantially the same and the length of the probes are substantially the same). Accordingly, the sensor 820 is able to associate each pulse with a different probe (and thus a particular area of the container 810) based on the amount of extra propagation time created by each delay line 850a-850n. The sensor 820 determines the average depth of the material 805a in the container 810a and the amount of materials 805n stored in the container 810n using the propagation time of the pulse through each of the probes 825a-825n.

Although FIGURE 8 illustrates one example of a pulse guided wave radar sensing system 800, various changes may be made to FIGURE 8. For example, the delay lines 850a-850n can be removed when each of the probes 825a-825n modifies a pulse to include a unique frequency signature. When the sensor 820 receives the pulse from the probe 825a, for example, the sensor 820 can identify that the pulse is from the probe 825a and not the probes 825b-825n based on the unique frequency signature included by the probe 825a in the pulse. As a result, the sensor 820 can identify that a pulse is received from a particular probe without using the delay lines 850a-850n.

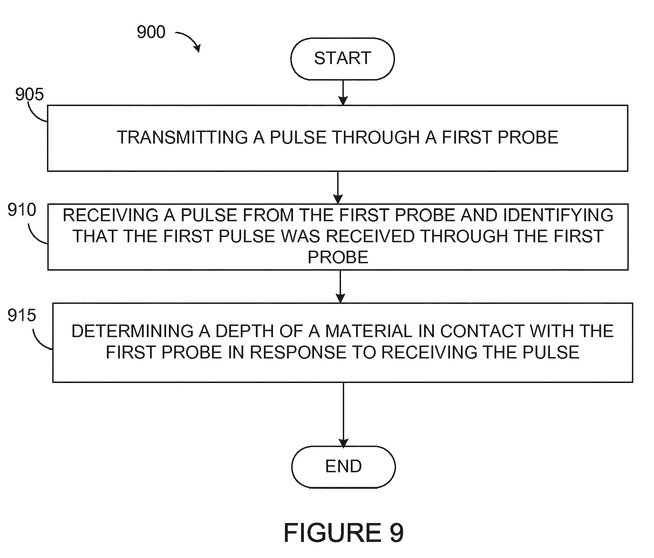

FIGURE 9 illustrates an example method 900 for using a sensing head according to this disclosure. The method 900 may be used in conjunction with one or more of the systems 100-800. The method 900 may be used with any other suitable system or device.

At step 905, a sensing head transmits a pulse through a first probe of at least a first probe and a second probe. At step 910, the sensing head receives the pulse from the first probe and identifies that the pulse was received through the first probe. The sensing head identifies that the pulse was received through the first probe based on a radio frequency (RF) switch indicting that the pulse was received through the first probe. The sensing head identifies that the pulse was received through the first probe based on a predetermined pulse time delay that differentiates the first probe from at least the second probe. At step 915, the sensing head determines a depth of a material in contact with the first probe in response to receiving the pulse. The sensing head estimates an amount of the material in a container based on the determined depth of the material in contact with the first probe and inner dimensions of the container.

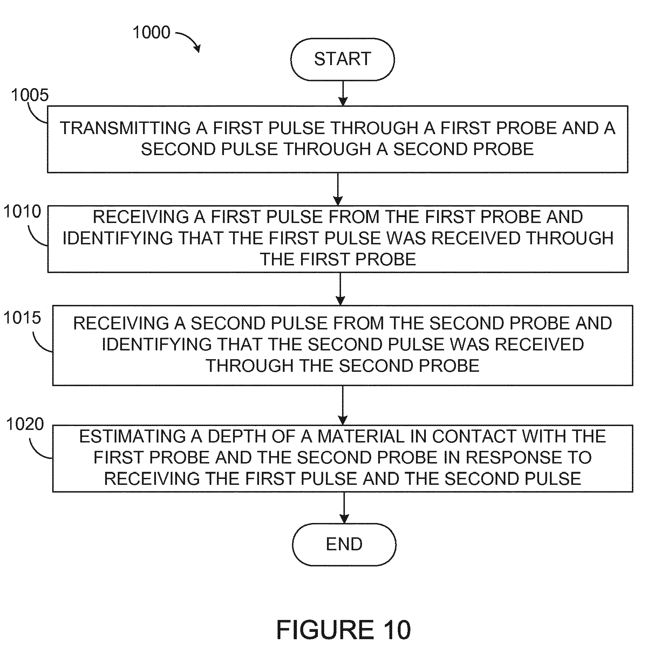

FIGURE 10 illustrates an example method 1000 for using a sensing head according to this disclosure. The method 1000 may be used in conjunction with one or more of the systems 100-800. The method 1000 may be used with any other suitable system or device.

At step 1005, a sensing head transmits a first pulse through a first probe and a second pulse through a second probe, where the first probe and the second probe are among two or more probes. At step 1010, the sensing head receives the first pulse from the first probe and identifies that the first pulse was received through the first probe. At step 1015, the sensing head receives the second pulse from the second probe and identifies that the second pulse was received through the second probe. The sensing head identifies that the first pulse was received through the first probe and that the second pulse was received through the second probe using a radio frequency (RF) switch indicting that the first pulse was received through the first probe and that the second pulse was received through the second probe. The sensing head identifies that the first pulse was received through the first probe and that the second pulse was received through the second probe based on a predetermined pulse time delay that differentiates the first probe from at least the second probe. The sensing head identifies that the first pulse was received through the first probe based on a first unique frequency signature of the received first pulse modified by the first probe and identifies that the second pulse was received through the second probe based on a second unique frequency signature of the received second pulse modified by the second probe. At step 1020, the sensing head estimates a depth of a material in contact with the first probe and the second probe in response to receiving the first pulse and the second pulse. The sensing head estimates an amount of the material in a container based on the estimated depth of the material in contact with the first probe and the second probe and inner dimensions of the container.

Although FIGURES 9 and 10 illustrates example methods for using a sensing head, various changes may be made to these figures. For example, while shown as a series of steps, various steps shown in FIGURE 9 or FIGURE 10 could overlap, occur in parallel, occur in a different order, or occur multiple times. Moreover, some steps could be combined or removed and additional steps could be added according to particular needs.

It may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. An apparatus comprising:
a sensing head (130) configured to:
transmit a pulse through a first probe (125a) among at least a first probe (125a) and a second probe (125b);
receive the pulse from the first probe (125a) and identify that the pulse was received through the first probe (125a); and
determine a depth of a material (105) in contact with the first probe (125a) in response to receiving the pulse.

2. The apparatus of Claim 1, wherein the sensing head (130) is configured to identify that the pulse was received through the first probe (125a) based on a radio frequency (RF) switch (135) indicting that the pulse was received through the first probe (125a).

3. The apparatus of Claim 1, wherein the sensing head (130) is configured to identify that the pulse was received through the first probe (125a) based on a predetermined pulse time delay that differentiates the first probe (125a) from at least the second probe (125b).

4. The apparatus of Claim 1, wherein the sensing head (130) is configured to identify that the pulse was received through the first probe (125a) based on a unique frequency signature of the received pulse modified by the first probe (125a).

5. The apparatus of Claim 1, wherein the sensing head (130) is configured to estimate an amount of the material (105) in a container (110) based on the determined depth of the material (105) in contact with the first probe (125a) and inner dimensions of the container (110).

6. A method comprising:
transmitting (905) a pulse through a first probe (125a) of two or more probes (125);
receiving (910) the pulse from the first probe (125a) and identifying that the pulse was received through the first probe (125a); and
determining (915) a depth of a material (105) in contact with the first probe (125a) in response to receiving the pulse.

7. The method of Claim 6, wherein identifying that the pulse was received through the first probe (125a) is based on a radio frequency (RF) switch (135) indicting that the pulse was received through the first probe (125a).

8. The method of Claim 6, wherein identifying that the pulse was received through the first probe (125a) is based on a predetermined pulse time delay that differentiates the first probe (125a) from at least the second probe (125b).

9. The method of Claim 6, wherein identifying that the pulse was received through the first probe (125a) is based on a unique frequency signature of the received pulse modified by the first probe (125a).

10. The method of Claim 6, further comprising estimating an amount of the material (105) in a container (110) based on the determined depth of the material (105) in contact with the first probe (125a) and inner dimensions of the container (110).

11. An apparatus comprising:
a sensing head (130) configured to:
transmit a first pulse through a first probe (125a) and transmit a second pulse through a second probe (125b), the first probe (125a) and the second probe (125b) among two or more probes;
receive the first pulse from the first probe (125a) and identify that the first pulse was received through the first probe (125a);
receive the second pulse from the second probe (125b) and identify that the second pulse was received through the second probe (125b); and
estimate a depth of a material (105) in contact with the first probe (125a) and the second probe (125b) in response to receiving the first pulse and the second pulse.

12. The apparatus of Claim 11, wherein the sensing head (130) is configured to identify that the first pulse was received through the first probe (125a) and that the second pulse was received through the second probe (125b) using a radio frequency (RF) switch (135) indicating that the first pulse was received through the first probe (125a) and that the second pulse was received through the second probe (125b).

13. The apparatus of Claim 11, wherein the sensing head (130) is configured to identify that the first pulse was received through the first probe (125a) and that the second pulse was received through the second probe (125b) based on a predetermined pulse time delay that differentiates the first probe (125a) from at least the second probe (125b).

14. The apparatus of Claim 11, wherein the sensing head (130) is configured to:
identify that the first pulse was received through the first probe (125a) based on a first unique frequency signature of the received first pulse modified by the first probe (125a), and
identify that the second pulse was received through the second probe (125b) based on a second unique frequency signature of the received second pulse modified by the second probe (125b).

15. The apparatus of Claim 11, wherein the sensing head (130) is configured to estimate an amount of the material (105) in a container (110) based on the estimated depth of the material (105) in contact with the first probe (125a) and the second probe (125b) and inner dimensions of the container (110).
